# FASCICULE DE BREVET EUROPEEN

(11) **EP 4 226 310 B1**
(45) Date de publication et mention de la délivrance du brevet: **29.10.2025**
(21) Numéro de dépôt: 21789711.5
(22) Date de dépôt: 07.10.2021
(51) Int. Cl.: G06Q 30/06, G06Q 50/08

(54) **PROCÉDÉS ET SYSTÈMES DE GESTION D'UNE FLOTTE DE VÉHICULES**
VERFAHREN UND SYSTEME ZUR VERWALTUNG EINER FAHRZEUGFLOTTE
METHODS AND SYSTEMS FOR MANAGING A VEHICLE FLEET

(30) Priorité: 08.10.2020 FR 2010287
(43) Date de publication de la demande: 16.08.2023
(73) Titulaire: Haulotte Group, 42420 Lorette (FR)
(72) Inventeur: THEVENON, Luc, 42100 Saint-Etienne (FR); HOURNE, Romain, 69530 Brignais (FR); SILVEIRA, Christophe, 69230 Saint Genis Laval (FR)
(74) Mandataire: Lavoix
(86) Numéro de dépôt international: PCT/EP2021/077765
(87) Numéro de publication internationale: WO 2022/074147

(56) Documents cités:
- US-A1- 2017 240 181
- US-A1- 2020 108 795

## Description

La présente invention concerne des procédés et des systèmes pour gérer une flotte de véhicules, notamment des véhicules de chantier tels que des nacelles élévatrices ou des véhicules de levage.

De façon générale, il existe des systèmes de gestion de flotte, par exemple utilisés par des loueurs de véhicules, pour gérer un parc de véhicules lorsque ces véhicules sont loués à des utilisateurs finaux, par exemple pour être utilisés sur des chantiers.

En pratique, ces véhicules sont généralement loués à des utilisateurs finaux pour des utilisations bien spécifiques, pendant une durée prédéfinie, tout en étant destinés à rester dans une zone géographique donnée.

Notamment, dans le cas de véhicules de chantier tels que des nacelles élévatrices ou des véhicules de levage, il est nécessaire que les utilisateurs soient capables d'utiliser ces véhicules en toute sécurité.

Il est donc souhaitable de pouvoir adapter les fonctionnalités disponibles pour chaque véhicule en fonction de permissions données aux utilisateurs, ce que les systèmes de gestion de flotte ne permettent pas de faire actuellement, notamment pour des véhicules de chantier tels que des nacelles élévatrices ou des véhicules de levage.

De son côté, US2017/0240181 divulgue un système pour gérer une flotte de véhicules de chantier utilisables par une pluralité d'opérateurs. La gestion opérée par ce système vise à éviter que les opérateurs des différents véhicules constituant la flotte n'aient à entrer un mot de passe différent pour chaque véhicule qu'ils utilisent. Ce système permet au gestionnaire de la flotte de véhicules de définir un profil utilisateur pour chacun des opérateurs sur un serveur distant, profil qui comporte notamment des restrictions appliquées à l'opérateur désigné. Ces profils utilisateurs sont ensuite transmis aux véhicules de la flotte au moyen d'une interface de communication : lorsque l'opérateur s'identifie à l'entrée dans le véhicule, son profil utilisateur et en particulier les restrictions qu'il contient sont mises en place par le contrôleur du véhicule. La gestion opérée par ce système est prévue pour être mise à jour de manière périodique ou à chaque réception d'une nouvelle politique de restrictions.

Un aspect de l'invention concerne un véhicule tel que défini à la revendication 1.

Grâce à l'invention, les fonctionnalités disponibles pour chaque véhicule peuvent être adaptées en fonction de permissions données aux utilisateurs. En particulier, il est possible de restreindre une ou plusieurs fonctionnalités du véhicule conformément à une politique de gestion de flotte, sans mettre en danger le véhicule ou son opérateur.

Des aspects avantageux mais non obligatoires d'un tel système sont énoncés aux revendications 2 à 8.

Selon un autre aspect, l'invention concerne un système de gestion de flotte, tel que défini à la revendication 9.

Selon un autre aspect, l'invention concerne un procédé de gestion d'une flotte de véhicules, tel que défini à la revendication 10.

L'invention sera mieux comprise et d'autres avantages de celle-ci apparaîtront plus clairement à la lumière de la description qui va suivre d'un mode de réalisation d'un procédé de gestion de flotte de véhicules et d'un système associé, donnée uniquement à titre d'exemple et faite en référence aux dessins annexés, dans lesquels :
[Fig 1] la figure 1 représente un véhicule, notamment un véhicule de chantier, ainsi qu'un système de gestion de flotte conforme à des modes de réalisation.
[Fig 2] la figure 2 représente schématiquement un système de commande embarqué à bord du véhicule de la figure 1 ;
[Fig 3] la figure 3 représente un exemple de liste de restrictions pour le véhicule de la figure 1 ;
[Fig 4] la figure 4 est un diagramme de flux schématisant des étapes d'un procédé de gestion d'une flotte de véhicules conforme à des modes de réalisation.

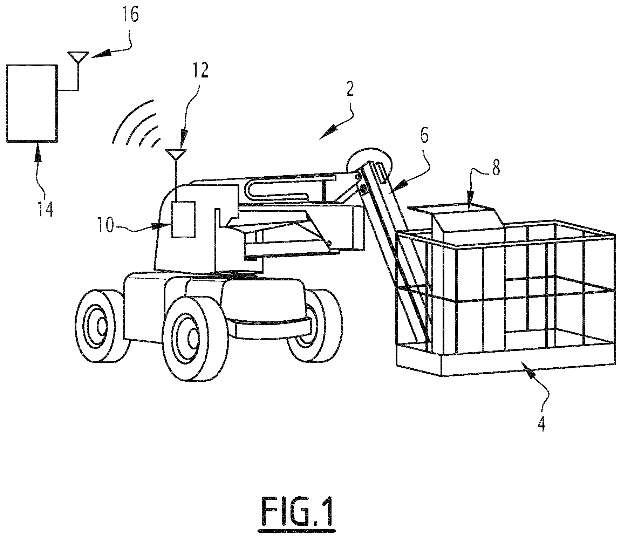

La figure 1 représente un véhicule 2, notamment un véhicule de chantier.

Dans l'exemple illustré, le véhicule 2 est un véhicule de levage, tel qu'une nacelle élévatrice.

Le véhicule 2 comporte une partie principale comportant des roues et un moteur, qui sont par exemple montés sur un châssis du véhicule 2.

En variante, les roues pourraient être remplacées par des chenilles, par exemple lorsque le véhicule 2 est un engin de terrassement.

Dans l'exemple de la figure 1, le véhicule 2 comprend également une nacelle 4 levable destinée à accueillir une ou plusieurs personnes.

La nacelle 4 est connectée à la partie principale du véhicule 2 par un ou plusieurs bras 6, tels que des bras 6 articulés ou des bras télescopiques.

Les bras 6 sont articulés entre eux et/ou articulés à la partie principale et/ou articulés à la nacelle 4. Par exemple, les bras 6 peuvent se déplacer sous l'effet d'actionneurs, tels que des vérins hydrauliques.

La nacelle 4 forme ainsi, avec les bras 6, une partie utile du véhicule 2, tel qu'un outil, actionnable par un utilisateur.

On distingue plus particulièrement deux configurations opposées de la partie utile du véhicule 2 :
- une configuration repliée, dans laquelle les bras 6 sont rétractés et/ou repliés, la nacelle 4 se situant alors à proximité du sol et de la partie principale, et
- une configuration déployée, dans laquelle les bras 6 sont déployés et/ou étendus, la nacelle 4 se trouvant alors en hauteur, par exemple à plusieurs mètres au-dessus du sol.

En variante, de façon générale, le véhicule 2 pourrait être un véhicule industriel comportant au moins une partie utile déplaçable par rapport à une partie principale du véhicule, tel qu'un engin de levage, ou un engin de terrassement, ou un engin de manutention.

En pratique, la partie utile peut servir à porter un outil, ou bien peut définir un volume de réception servant à accueillir un ou plusieurs utilisateurs ou à transporter une charge utile.

Parmi des exemples possibles de tels véhicules industriels, on peut citer un camion à benne basculante, ou un chariot élévateur, ou un camion pourvu d'un bras articulé, ou une pelleteuse, ou tout véhicule industriel équivalent.

Dans ces cas, différentes configurations de la partie utile, analogues aux configurations déployée et rétractée, peuvent être définies de façon analogue en fonction de la nature de la partie utile.

Le véhicule 2 comprend également un pupitre de commande 8, ici monté dans la nacelle, et un système de commande 10, ici installé dans la partie principale du véhicule.

Le système de commande 10 permet d'assurer le fonctionnement du véhicule 2, et notamment le déplacement de la partie utile entre ses différentes configurations, ou encore le déplacement du véhicule 2 grâce aux roues et au moteur, en fonction d'ordres de commande saisis par un utilisateur au moyen du pupitre de commande 8.

Selon des exemples, le pupitre de pilotage 8 peut comporter un ou plusieurs dispositifs de pilotage tels qu'un levier, un volant, une manette, des interrupteurs, un écran d'affichage, des instruments de mesure, ou tout dispositif analogue.

Le pupitre de commande 8 peut aussi comporter un circuit électronique de traitement, pouvant comprendre un microcontrôleur ou un microprocesseur.

Le pupitre de commande 8 peut également comporter un dispositif d'identification, tel qu'un lecteur de carte magnétique ou un lecteur de carte à puce, ou une interface de communication apte à être connectée à un dispositif portable de communication sans fil, ou encore un système électromécanique à clé.

Le système de commande 10 est connecté à une interface de communication radio 12, comprenant par exemple une antenne et un circuit électronique de traitement.

L'interface de communication 12 est par exemple configurée pour établir une liaison de communication radio, telle qu'une liaison de courte portée ou de longue portée, avec un appareil distant.

Le système de commande 10 peut ainsi se connecter à un serveur informatique distant 14, dont le rôle sera précisé dans ce qui va suivre, par l'intermédiaire d'un réseau de communication.

Par exemple, le serveur informatique distant 14 fait partie d'un système de gestion de flotte.

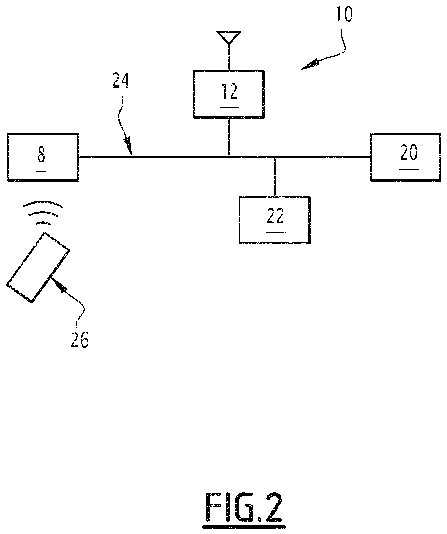

Comme illustré par la figure 2, le système de commande 10 comporte un dispositif électronique de traitement de données 20, une interface de commande 22 permettant d'envoyer des ordres vers le moteur et les actionneurs, et un bus de communication 24 qui connecte entre eux le dispositif électronique de traitement de données 20, l'interface de commande 22 et l'interface de communication 12.

Par exemple, le dispositif électronique de traitement de données 20, ici nommé « unité centrale », comporte un processeur, tel qu'un microcontrôleur ou un microprocesseur, et une mémoire.

Dans cet exemple, l'interface de commande 22 peut comporter un dispositif électromécanique ou un circuit électrique qui connecte une sortie du dispositif électronique 20 au moteur et/ou à un ou plusieurs actionneurs, par exemple afin de transmettre à ces derniers des signaux électriques de commande.

Selon un exemple de réalisation, le bus de communication 24 est un bus CAN, bien que d'autres implémentations soient possibles en variante.

Sur la figure 2 est également illustré un objet d'identification 26 qui est apte à être détecté par le dispositif d'identification décrit ci-dessus. L'objet d'identification 26 est utilisé pour identifier un utilisateur auprès du système 10.

Par exemple, l'objet d'identification 26 peut être une carte électronique, ou une carte magnétique, ou une clé, ou un dispositif RFID, ou un téléphone mobile, ou tout appareil approprié.

En variante, l'identification peut être réalisée au moyen d'un mot de passe que l'utilisateur doit saisir sur le pupitre 8, par exemple au moyen d'une interface dédiée, ou bien en saisissant le mot de passe sur un téléphone ou un dispositif de communication mobile que l'utilisateur possède et qui est couplé au pupitre 8.

Dans cette variante, l'objet d'identification 26 n'est alors pas rendu nécessaire. Le dispositif d'identification est modifié en conséquence.

Dans de nombreux modes de réalisation, l'unité centrale 20 est configurée pour imposer des restrictions d'usage, par exemple pour limiter ou inhiber au moins une partie des fonctionnalités du véhicule 2.

Ces restrictions d'usage sont implémentées par l'unité centrale 20 en fonction de politiques de restriction préalablement définies.

Selon des exemples de mise en œuvre, l'unité centrale 20 comporte un module de gestion implémenté grâce à des instructions spécifiques enregistrées en mémoire et exécutées par le processeur. Le module de gestion est apte à intercepter les ordres de commande transitant sur le bus 24 et peut sélectivement inhiber ou autoriser l'exécution de certains de ces ordres.

Par exemple, lorsqu'un utilisateur utilise le pupitre 8 pour piloter le véhicule 2, des ordres de mouvement correspondant sont émis par le pupitre 8 et sont transmis sur le bus 24 vers l'unité centrale 20.

Ces ordres sont reçus et traités par l'unité centrale 20. Selon que des politiques de restrictions ont été activées ou non, l'unité centrale 20 peut exécuter certains des ordres de mouvement reçus et, au contraire, inhiber certains ordres si ces ordres sont contraires à une politique de restriction.

Par exemple, les ordres reçus sont analysés par l'unité centrale 20 et sont comparés avec les politiques de restriction en vigueur enregistrées pour déterminer si l'ordre reçu peut être autorisé ou s'il doit être rejeté.

Si un ordre reçu est identifié comme pouvant être autorisé, alors l'unité centrale 20 envoie un signal de commande sur le bus 24 à destination de l'interface 22 pour piloter le ou les actionneurs correspondants.

Dans le cas contraire, si un ordre reçu est identifié comme ne pouvant pas être autorisé selon les politiques de restriction en vigueur, alors dans ce cas, l'ordre reçu est inhibé par l'unité centrale 20 et aucun signal de commande correspondant n'est émis à destination de l'interface 22.

Ainsi, de façon générale, l'unité centrale 20 est configurée pour analyser les ordres qu'elle reçoit depuis un utilisateur pilotant le véhicule 2, et pour les comparer avec les politiques de restrictions mises en place.

Comme on le comprendra à la lecture de ce qui suit, les politiques de restriction sont enregistrées localement dans l'unité centrale 20 et peuvent être modifiées à distance, par exemple par l'intermédiaire du serveur informatique distant 14 grâce au système de gestion.

Selon des exemples non limitatifs, les ordres peuvent concerner des ordres de déplacement du véhicule 2, tels que des ordres d'accélération ou de freinage pour mettre en mouvement le véhicule 2 (ou au contraire l'immobiliser), ou des ordres de braquage des roues pour faire tourner le véhicule.

Les ordres peuvent aussi être des ordres pour commander la partie utile du véhicule 2, ou plus généralement tout outil actionnable associé au véhicule 2. Par exemple, dans le cas d'un véhicule de levage, il peut s'agir d'ordres visant à étendre ou à rétracter les bras 6, ou à lever la nacelle 4 à une certaine hauteur.

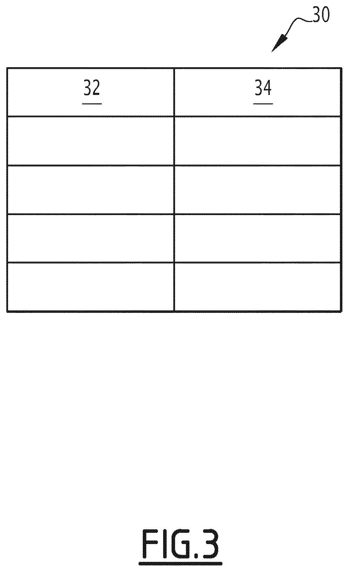

La figure 3 représente très schématiquement un exemple de politiques de restriction enregistrées dans l'unité centrale 20.

Par exemple, ces politiques de restriction sont enregistrées dans une structure de données 30, telle qu'un tableau ou une liste, ou une base de données, ou équivalent. Cette structure de données est stockée en mémoire de l'unité centrale, ou dans un dispositif de stockage de données couplé à l'unité centrale 20.

Par exemple, chaque politique de restriction comporte un identifiant 32 qui identifie un type d'ordre de commande susceptible d'être reçu par l'unité centrale 20.

Pour chaque identifiant 32, la politique de restriction comporte un ou plusieurs attributs, qui indiquent dans quelles circonstances l'ordre de commande correspondant peut être autorisé ou, au contraire, s'il doit être refusé.

Par exemple, des restrictions spécifiques peuvent être définies en fonction du profil de l'utilisateur qui a émis l'ordre de commande depuis le pupitre 8. Ainsi, chaque politique de restriction peut être associée à un attribut précisant à quelles catégories prédéfinies d'utilisateurs cette restriction doit s'appliquer. Ensuite, lorsque l'unité centrale 20 compare les ordres, l'attribut correspondant peut être comparé avec le profil utilisateur auquel appartient l'utilisateur qui a envoyé le ou les ordres. Ce profil peut être déterminé par un procédé d'identification, comme expliqué ci-après.

Les attributs peuvent concerner d'autres aspects du fonctionnement du véhicule 2. Par exemple, des attributs peuvent concerner la date, la vitesse de déplacement du véhicule, ou la position du véhicule, et bien d'autres exemple encore.

En pratique, des profils prédéfinis peuvent être enregistrés dans le système 10, par exemple dans une liste de profils prédéfinis.

Pour chacun de ces profils, certaines actions peuvent être interdites, soit de façon permanente, soit en fonction d'autres critères.

En d'autres termes, chacun de ces profils peut disposer de permissions d'usage plus ou moins étendues selon les besoins liés à la profession de l'utilisateur, mais aussi selon les habilitations de l'utilisateur.

Selon un exemple non-limitatif, une liste de profils comprend au moins un ou plusieurs des profils suivants :
- conducteur ;
- travailleur en hauteur ;
- superviseur de sécurité sur un chantier ;
- transporteur ;
- technicien de maintenance ;
- inspecteur ;
- propriétaire du véhicule.

Selon un autre exemple, des profils peuvent être basés sur des utilisateurs individuels, c'est-à-dire qu'un profil peut être associé à un unique utilisateur.

En d'autres termes, le système 10 peut comporter une liste nominative d'utilisateurs qui disposent chacun de permissions spécifiques, lesquelles sont définies par une ou plusieurs politiques de restriction.

De préférence, le système 10 est configuré pour sélectionner automatiquement un profil utilisateur parmi les profils prédéfinis, par exemple en demandant à l'utilisateur de s'identifier avant de pouvoir utiliser le pupitre 8.

Avantageusement, cette identification est réalisée au moyen du dispositif d'identification du pupitre 8.

Dans certains modes de réalisation, cette identification peut être réalisée au moyen d'un procédé d'identification comprenant les étapes suivantes :
a) collecter une identification de l'utilisateur, ce dernier s'étant identifié sur le dispositif d'identification, par exemple à l'aide d'un objet d'identification 26;
b) identifier un profil de cet utilisateur en choisissant, parmi une liste de profils prédéterminée, un profil correspondant à l'identité de l'utilisateur collectée lors de l'étape a).

Avantageusement, lorsqu'un utilisateur est identifié, le pupitre 8 peut automatiquement signaler, par exemple sur un écran ou par des indicateurs lumineux, ou sur toute autre interface homme-machine du pupitre 8, les fonctionnalités qui sont accessibles et celles qui ne sont pas accessibles, en fonction des politiques de restriction en vigueur et en fonction du profil auquel l'utilisateur identifié est associé.

Par exemple, ces informations sont envoyées automatiquement au pupitre 8 par l'unité centrale 20.

Les politiques de restriction peuvent porter sur de nombreux aspects du véhicule 2.

Selon un exemple, une politique de restriction peut être définie de façon à n'autoriser des déplacements du véhicule 2 qu'à l'intérieur d'une zone géographique prédéfinie, et interdire tout déplacement du véhicule à l'extérieur de cette zone géographique.

Selon un autre exemple, une politique de restriction peut être définie de façon à n'autoriser un fonctionnement du véhicule 2 que pendant certaines heures de la journée, et interdire toute utilisation du véhicule en dehors de ces heures de fonctionnement.

Selon d'autres exemples, une politique de restriction peut être définie pour limiter la vitesse de déplacement du véhicule 2.

Selon un autre exemple, une politique de restriction peut être définie pour limiter l'utilisation de la partie utile, par exemple pour limiter le déploiement du bras 6 ou pour limiter la hauteur de la nacelle 4.

Plusieurs restrictions peuvent être combinées entre elles pour former de nouvelles politiques de restrictions.

D'autres restrictions peuvent être définies, les exemples donnés ci-dessus n'étant pas limitatifs.

Avantageusement, les politiques de restriction peuvent être définies de sorte à limiter une action au sein d'un intervalle prédéfini de valeurs.

Par exemple, la vitesse de déplacement peut être limitée au sein d'un intervalle de valeurs de vitesse. La hauteur de la nacelle peut aussi être limitée à l'intérieur d'un intervalle prédéfini de valeurs de hauteurs. De façon analogue, la longueur de déploiement du bras 6 peut être restreinte à un intervalle prédéfini de valeurs de longueur.

De façon particulièrement avantageuse, plusieurs intervalles de valeurs peuvent être prédéfinis et associés à différents profils utilisateurs.

Par exemple, un profil correspondant à une catégorie d'utilisateurs expérimentés ou disposant de permissions élevées peut être associé à un intervalle de valeurs permises plus large qu'un profil correspondant à une catégorie d'utilisateurs peu expérimentés ou disposant de permissions restreintes.

Dans de nombreux modes de réalisation, les politiques de restriction peuvent être mises à jour depuis le serveur informatique 14.

Par exemple, un gestionnaire de flotte peut définir des politiques de restriction pour chacun des véhicules de son parc. Ces politiques peuvent être ensuite transmises par une liaison de communication vers l'interface 12 du véhicule 2.

Un aspect de la présente invention est donc de proposer une méthode visant à adapter l'usage de la machine pour bloquer ou autoriser certaines fonctionnalités à distance. Les fonctionnalités du véhicule 2 ou d'un outil associé au véhicule peuvent ainsi être adaptées en fonction de chaque client. Cela permet d'adapter à distance la configuration du véhicule 2 et de ses accessoires aux besoins du client.

Notamment, on évite de mettre à disposition d'un client une machine suréquipée par rapport au besoin exprimé par le client, ce qui lui évite de bénéficier de prestations indues tout en évitant de payer pour un suréquipement dont il n'aurait pas besoin.

Avantageusement, la mise à jour des politiques de restriction enregistrées dans le système de commande 10 du véhicule 2 peut être réalisée périodiquement.

Selon un exemple de mise en œuvre, le calculateur électronique de l'interface de communication 12 est programmé pour interroger régulièrement le serveur 14, par exemple avec une périodicité de 24 heures.

Lorsque l'interface 12 détecte qu'une politique de restriction a été mise à jour sur le serveur 14, ou qu'une nouvelle politique de restriction a été créée, ou encore qu'une politique de restriction a été supprimée, les informations correspondantes sont téléchargées par l'interface 12 puis sont envoyées vers l'unité centrale 20. Celle-ci et automatiquement à jour la liste 30 de politiques de restriction en conséquence.

Avantageusement, la mise à jour de la liste 30 de restrictions peut être mise en œuvre même lorsque le véhicule 2 est à l'arrêt, par exemple lorsque le contact est coupé et le moteur éteint.

Par exemple, l'interface 12 est dotée d'une batterie qui lui permet de fonctionner même lorsque le véhicule 2 est à l'arrêt. Si l'interface 12 détecte que les restrictions doivent être mises à jour après avoir interrogé le serveur 14, alors l'interface 12 peut être programmée pour réveiller l'unité centrale 20 pour lui notifier la restriction à mettre à jour.

Cette notification peut être réalisée au moyen du bus 24, ou bien au moyen d'une liaison filaire dédiée (non illustrée) qui connecte l'unité centrale 20 à l'interface 12.

De façon optionnelle mais néanmoins avantageuse, l'unité centrale 20 est programmée pour implémenter automatiquement des restrictions d'utilisation si l'interface 12 a été endommagée ou a été retirée, ou déconnectée de l'unité centrale 20. En pratique, ces restrictions peuvent porter sur des fonctionnalités essentielles du véhicule 2. Ces restrictions peuvent être définies à l'avance dans l'unité centrale 20.

Cela permet d'éviter qu'un utilisateur ne puisse empêcher la mise à jour des restrictions en sabotant l'interface 12.

Par exemple, l'unité centrale 20 est programmée pour interroger périodiquement l'interface 12 en envoyant un signal d'interrogation sur une liaison filaire entre l'interface 12 et l'unité centrale 20 telle que définie précédemment.

Lorsqu'une restriction doit être modifiée ou ajoutée, l'unité centrale 20 est programmée pour ne pas appliquer immédiatement la restriction, afin d'éviter de bloquer le véhicule 2 dans une configuration susceptible de poser un danger.

Ainsi, une nouvelle restriction n'est appliquée que suite au redémarrage du véhicule, ou après que la fonctionnalité concernée par la restriction ait été réinitialisée dans un état stable et sûr.

Par exemple, lorsque la restriction porte sur la hauteur de la nacelle 4 ou sur la longueur du bras 6, il est préférable de n'appliquer la restriction que lorsque le véhicule a été ramené dans la configuration repliée, par exemple avec la nacelle 4 redescendue au niveau du sol et le bras 6 rétracté.

Dans le cas contraire, si la restriction venait à être appliquée immédiatement alors que le bras 6 est déployé ou que la nacelle 4 est en hauteur, un utilisateur pourrait se retrouver bloqué en hauteur sans possibilité de redescendre.

De façon analogue, si la restriction porte sur la capacité du véhicule 2 à se déplacer, alors il est préférable d'attendre le redémarrage du véhicule 2 pour appliquer la restriction, afin d'éviter que le véhicule ne se retrouve coincé sur un emplacement dangereux, par exemple au milieu d'un carrefour routier.

Avantageusement, lorsqu'une restriction est active, le pupitre 8 peut afficher une alerte pour informer l'utilisateur. L'alerte peut être affichée en activant un indicateur lumineux et/ou un indicateur sonore. L'alerte peut aussi prendre la forme d'un message affiché sur un écran d'affichage sur le pupitre 8, ou sur un appareil de communication connecté au pupitre 8.

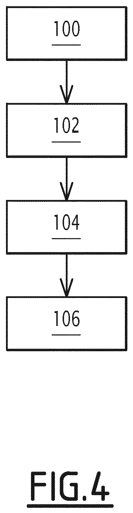

Un exemple de fonctionnement du système de gestion est illustré par la figure 4.

Lors d'une étape 100, une nouvelle restriction est définie par le système de gestion, par exemple dans le serveur informatique 14.

Cette restriction peut être définie par un gestionnaire, par exemple en étant saisie au moyen d'une interface homme-machine, ou d'une interface web, ou d'un appareil de communication connecté au serveur informatique 14. Ce dernier acquiert alors la ou les restrictions nouvellement définies.

Par exemple, comme illustré précédemment, chaque restriction peut être associée à un ou plusieurs profils d'utilisateur. Ces profils peuvent être ceux déjà définis dans le véhicule 2 concerné, ou bien il peut s'agir de nouveaux profils qui seront alors installés dans le véhicule.

Chaque restriction peut concerner un unique véhicule 12, ou bien une pluralité de véhicule. La restriction peut alors être associée à un ou plusieurs identifiants qui identifie chacun un véhicule 2 de la flotte.

Lors d'une étape 102, ladite restriction est transmise audit véhicule 2, par une liaison de communication établie entre ledit serveur informatique 14 et le système de commande 10 du véhicule. Par exemple, il s'agit de la liaison précédemment évoquée mise en place par l'interface de communication 12.

Lors d'une étape 104, le système de commande 10 met à jour la liste 30 de politiques de restrictions en fonction de la restriction reçue.

Puis, lors d'une étape 106, le système de commande 10 inhibe un ordre de commande émis par un pupitre de pilotage 8 pour interdire l'usage d'une fonctionnalité correspondant à une restriction enregistrée dans la liste de politiques de restrictions.

En variante, le procédé pourrait être mis en œuvre différemment. Cet exemple ne fait pas obstacle à ce que, dans d'autres modes de réalisation, d'autres étapes soient mises en œuvre conjointement et/ou séquentiellement avec ces étapes.

Les modes de réalisation et les variantes envisagés ci-dessus peuvent être combinés entre eux pour créer de nouveaux modes de réalisation.

## Revendications

1. Véhicule (2), notamment un véhicule de chantier tels qu'une nacelle élévatrice ou un véhicule de levage, ce véhicule (2) comportant un système de commande (10) comprenant une unité centrale (20) et une interface de communication (12), l'unité centrale (20) étant configurée pour :
- recevoir (102) une restriction d'une fonctionnalité du véhicule (2), au moyen de interface de communication (12) ;
- mettre (104) à jour une liste de politiques de restrictions en fonction de la restriction reçue ;
- analyser les ordres de commande émis par un pupitre de pilotage (8) du véhicule en comparant lesdits ordres à des politiques de restriction enregistrées dans ladite liste, et inhiber (106) un desdits ordres de commande pour interdire l'usage d'une fonctionnalité correspondant à une restriction enregistrée dans la liste de politiques de restrictions,
**caractérisé en ce que** l'unité centrale (20) est programmée pour, lorsqu'une restriction doit être modifiée ou ajoutée, n'appliquer la restriction qu'après un redémarrage du véhicule ou après une réinitialisation de la fonctionnalité concernée.

2. Véhicule (2) selon la revendication 1, dans lequel la restriction concerne des fonctions liées au déplacement du véhicule, ou des fonctions liées à l'utilisation d'une partie utile du véhicule ou d'un outil associé au véhicule.

3. Véhicule (2) selon l'une quelconque des revendications précédentes, dans lequel la restriction est associée à un profil utilisateur prédéfini.

4. Véhicule (2) selon les revendications 2 et 3, dans lequel la restriction est définie de sorte à limiter une action au sein d'un intervalle prédéfini de valeurs, plusieurs intervalles de valeurs pouvant être prédéfinis et associés à différents profils utilisateurs.

5. Véhicule (2) selon l'une quelconque des revendications précédentes, dans lequel le pupitre de pilotage (8) est configuré pour afficher une alerte pour informer un utilisateur lorsqu'une restriction est active.

6. Véhicule (2) selon l'une quelconque des revendications précédentes, dans lequel l'interface de communication est programmée pour mettre à jour régulièrement les politiques de restriction enregistrées.

7. Véhicule (2) selon l'une quelconque des revendications précédentes, dans lequel l'unité centrale (20) est programmée pour implémenter automatiquement des restrictions d'utilisation si l'interface de communication (12) a été endommagée ou a été retirée.

8. Véhicule (2) selon l'une quelconque des revendications précédentes, dans lequel le véhicule (2) comporte une partie principale, ayant des roues ou chenilles et un moteur, et une partie utile, incluant une nacelle (4) levable, qui est destinée à accueillir une ou plusieurs personnes, et un ou plusieurs bras (6), qui connectent la nacelle à la partie principale du véhicule,
dans lequel la partie utile est déplaçable entre :
- une configuration repliée, dans laquelle le ou les bras (6) sont rétractés et/ou repliés, la nacelle (4) se situant alors à proximité du sol et de la partie principale, et
- une configuration déployée, dans laquelle le ou les bras (6) sont déployés et/ou étendus, la nacelle (4) se trouvant alors en hauteur,
et dans lequel l'unité centrale (20) est programmée pour, lorsqu'une restriction portant sur la hauteur de la nacelle (4) ou sur la longueur du ou des bras (6) doit être modifiée ou ajoutée, n'appliquer la restriction qu'après que le véhicule a été ramené dans la configuration repliée.

9. Système de gestion de flotte comportant un véhicule (2) conforme à l'une quelconque des revendications précédentes et un serveur informatique (14) apte à être connecté au véhicule (2), dans lequel le serveur informatique (14) est configuré pour:
- définir (100), sur le serveur informatique (14), une restriction d'au moins une fonctionnalité d'un véhicule (2) ;
- transmettre (102) ladite restriction audit véhicule (2) par une liaison de communication établie entre ledit serveur informatique et un système de commande (10) du véhicule.

10. Procédé de gestion d'une flotte de véhicules, notamment des véhicules de chantier tels que des nacelles élévatrices ou des véhicules de levage, ce procédé comportant des étapes consistant à :
- définir (100), sur un serveur informatique (14) d'un système de gestion de flotte, une restriction d'au moins une fonctionnalité d'un véhicule (2) ;
- transmettre (102) ladite restriction audit véhicule (2) par une liaison de communication établie entre ledit serveur informatique et un système de commande (10) du véhicule ;
- par le système de commande (10) du véhicule (2), mettre à jour (104) une liste de politiques de restrictions en fonction de la restriction reçue ;
- par le système de commande (10) du véhicule (2), analyser les ordres de commande émis par un pupitre de pilotage (8) du véhicule en comparant lesdits ordres à des politiques de restriction enregistrées dans ladite liste, et inhiber (106) un desdits ordres de commande pour interdire l'usage d'une fonctionnalité correspondant à une restriction enregistrée dans la liste de politiques de restrictions, **caractérisé en ce que** lorsqu'une restriction doit être modifiée ou ajoutée, la restriction n'est appliquée qu'après un redémarrage du véhicule ou après une réinitialisation de la fonctionnalité concernée.

## Patentansprüche

1. Fahrzeug (2), insbesondere ein Baufahrzeug, wie beispielsweise eine Arbeitsbühne oder ein Hebefahrzeug, wobei dieses Fahrzeug (2) ein Steuersystem (10) aufweist, umfassend eine Zentraleinheit (20) und eine Kommunikationsschnittstelle (12), wobei die Zentraleinheit (20) zu Folgendem konfiguriert ist:
- Empfangen (102) einer Beschränkung einer Funktion des Fahrzeugs (2) mittels der Kommunikationsschnittstelle (12);
- Aktualisieren (104) einer Liste von Beschränkungsrichtlinien basierend auf der empfangenen Beschränkung;
- Analysieren von Steuerbefehlen, die von einer Steuerkonsole (8) des Fahrzeugs ausgegeben werden, durch Vergleichen der Befehle mit Beschränkungsrichtlinien, die in der Liste gespeichert sind, und Hemmen (106) eines der Steuerbefehle, um die Verwendung einer Funktion zu verbieten, die einer Beschränkung entspricht, die in der Liste der Beschränkungsrichtlinien gespeichert ist, **dadurch gekennzeichnet, dass** die Zentraleinheit (20) programmiert ist, um, wenn eine Beschränkung geändert oder hinzugefügt werden soll, die Beschränkung erst nach einem Neustart des Fahrzeugs oder nach einem Zurücksetzen der betroffenen Funktion anzuwenden.

2. Fahrzeug (2) nach Anspruch 1, wobei sich die Beschränkung auf Funktionen bezieht, die mit der Fortbewegung des Fahrzeugs verbunden sind, oder auf Funktionen, die mit der Verwendung eines nützlichen Teils des Fahrzeugs oder eines mit dem Fahrzeug verbundenen Werkzeugs verbunden sind.

3. Fahrzeug (2) nach einem der vorherigen Ansprüche, wobei die Beschränkung mit einem vordefinierten Benutzerprofil assoziiert ist.

4. Fahrzeug (2) nach Anspruch 2 und 3, wobei die Beschränkung definiert ist, um eine Aktion innerhalb eines vordefinierten Wertebereichs zu begrenzen, wobei mehrere Wertebereiche vordefiniert und mit verschiedenen Benutzerprofilen assoziiert sein können.

5. Fahrzeug (2) nach einem der vorherigen Ansprüche, wobei die Steuerkonsole (8) konfiguriert ist, um eine Warnung anzuzeigen, um einen Benutzer zu informieren, wenn eine Beschränkung aktiv ist.

6. Fahrzeug (2) nach einem der vorherigen Ansprüche,
wobei die Kommunikationsschnittstelle
programmiert ist, um die gespeicherten Beschränkungsrichtlinien regelmäßig zu aktualisieren.

7. Fahrzeug (2) nach einem der vorherigen Ansprüche, wobei die Zentraleinheit (20) programmiert ist, um automatisch Nutzungsbeschränkungen zu implementieren, wenn die Kommunikationsschnittstelle (12) beschädigt wurde oder entfernt worden ist.

8. Fahrzeug (2) nach einem der vorherigen Ansprüche,
wobei das Fahrzeug (2) einen Hauptabschnitt, der Räder oder Raupen und einen Motor aufweist, und einen Nutzabschnitt, der eine anhebbare Arbeitsbühne (4), die dazu bestimmt ist, eine oder mehrere Personen aufzunehmen, und einen oder mehrere Arme (6), die die Arbeitsbühne mit dem Hauptabschnitt des Fahrzeugs verbinden, einschließt, aufweist,
wobei der Nutzabschnitt verschiebbar ist zwischen:
- einer eingeklappten Konfiguration, in der der Arm oder die Arme (6) eingezogen und/oder eingeklappt sind, wobei sich die Arbeitsbühne (4) dann in der Nähe des Bodens und des Hauptabschnitts befindet, und
- einer ausgefahrenen Konfiguration, in der der Arm oder die Arme (6) ausgefahren und/oder gestreckt sind, wobei sich die Arbeitsbühne (4) dann in der Höhe befindet,
und wobei die Zentraleinheit (20) programmiert ist, um, wenn eine Beschränkung, die sich auf die Höhe der Arbeitsbühne (4) oder die Länge des Arms oder der Arme (6) bezieht, geändert oder hinzugefügt werden soll, die Beschränkung erst anzuwenden, nachdem das Fahrzeug in die zusammengeklappte Konfiguration zurückgebracht worden ist.

9. Flottenmanagementsystem, umfassend ein Fahrzeug (2) nach einem der vorherigen Ansprüche, und einen Computerserver (14), der geeignet ist, um mit dem Fahrzeug (2) verbunden zu werden, wobei der Computerserver (14) zu Folgendem konfiguriert ist:
- Definieren (100), auf dem Computerserver (14), einer Beschränkung von mindestens einer Funktion eines Fahrzeugs (2);
- Übertragen (102) der Beschränkung an das Fahrzeug (2) über eine Kommunikationsverbindung, die zwischen dem Computerserver und einem Steuersystem (10) des Fahrzeugs hergestellt wird.

10. Verfahren zur Verwaltung einer Fahrzeugflotte, insbesondere von Baufahrzeugen, wie beispielsweise Arbeitsbühnen oder Hebefahrzeuge, wobei dieses Verfahren Schritte umfasst, die aus Folgendem bestehen:
- Definieren (100), auf einem Computerserver (14) eines Flottenmanagementsystems, einer Beschränkung von mindestens einer Funktion eines Fahrzeugs (2);
- Übertragen (102) der Beschränkung an das Fahrzeug (2) über eine Kommunikationsverbindung, die zwischen dem Computerserver und einem Steuersystem (10) des Fahrzeugs hergestellt wird;
- durch das Steuersystem (10) des Fahrzeugs (2), Aktualisieren (104) einer Liste von Beschränkungsrichtlinien abhängig von der empfangenen Beschränkung;
- durch das Steuersystem (10) des Fahrzeugs (2), Analysieren der von einer Steuerkonsole (8) des Fahrzeugs ausgegebenen Steuerbefehle durch Vergleichen der Befehle mit in der Liste gespeicherten Beschränkungsrichtlinien und Hemmen (106) eines der Steuerbefehle, um die Verwendung einer Funktion zu verbieten, die einer in der Liste der Beschränkungsrichtlinien gespeicherten Beschränkung entspricht, **dadurch gekennzeichnet, dass**, wenn eine Beschränkung geändert oder hinzugefügt werden muss, die Beschränkung erst nach einem Neustart des Fahrzeugs oder nach einem Zurücksetzen der betroffenen Funktion angewendet wird.

## Claims

1. A vehicle (2), in particular a work-site vehicle such as an aerial work platform or a lifting vehicle, the vehicle (2) including a control system (10) comprising a central unit (20) and a communication interface (12), the central unit (20) being configured for:
- receiving (102) a restriction of a function of the vehicle (2), by means of the communication interface (12);
- updating (104) a list of restriction policies according to the received restriction;
- analyzing control orders issued by a control console (8) of the vehicle by comparing said control orders with restriction policies stored in said list, and inhibiting (106) one of said control orders so as to prohibit the use of a function corresponding to a restriction stored in the list of restriction policies,
**characterized in that** the central unit (20) is programmed for, when a restriction is to be modified or added, applying the restriction only after a restart of the vehicle or after a reset of the function concerned.

2. The vehicle (2) according to claim 1, wherein the restriction relates to functions related to the movement of the vehicle, or to functions related to the use of a working part of the vehicle or of a tool associated with the vehicle.

3. The vehicle (2) according to any one of the preceding claims, wherein the restriction is associated with a predefined user profile.

4. The vehicle (2) according to the claims 2 and 3, wherein the restriction is defined so as to limit an action within a predefined range of values, a plurality of ranges of values being predefined and associated with different user profiles.

5. The vehicle (2) according to any one of the preceding claims, wherein the control console (8) is configured for displaying an alert for informing a user when a restriction is active.

6. The vehicle (2) according to any one of the preceding claims, wherein the communication interface is programmed for regularly updating the stored restriction policies.

7. The vehicle (2) according to any one of the preceding claims, wherein the central unit (20) is programmed for automatically implementing usage restrictions if the communication interface (12) has been damaged or removed.

8. The vehicle (2) according to any one of the preceding claims,
wherein the vehicle (2) comprises a main part, having wheels or tracks and an engine, and a working part, including a liftable cradle (4) intended to accommodate one or more persons, and one or more arms (6) connecting the cradle to the main section of the vehicle,
wherein the working section is movable between:
- a folded configuration, in which the arm(s) (6) are retracted and/or folded, the cradle (4) then being located close to the ground and to the main part, and
- a deployed configuration, in which the arm(s) (6) are deployed and/or extended, the cradle (4) then being at height,
and wherein the central unit (20) is programmed so that, when a restriction relating to the height of the cradle (4) or the length of the arm(s) (6) needs to be modified or added, it only applies the restriction after the vehicle has been returned to the folded configuration.

9. A fleet management system including a vehicle (2) according to any of one the preceding claims and a computer server (14) able to be connected to the vehicle (2), wherein the computer server (14) is configured for:
- defining (100), on the computer server (14), a restriction of at least one function of a vehicle (2);
- transmitting (102) said restriction to said vehicle (2) via a communication link established between said computer server and a control system (10) of the vehicle.

10. A method for managing a fleet of vehicles, in particular work-site vehicles such as aerial work platforms or lifting vehicles, the method including steps consisting of:
- defining (100), on a computer server (14) of a fleet management system, a restriction of at least one function of a vehicle (2);
- transmitting (102) said restriction to said vehicle (2) via a communication link established between said computer server and a control system (10) of the vehicle;
- by means of the control system (10) of the vehicle (2), updating (104) a list of restriction policies according to the restriction received;
- by means of the control system (10) of the vehicle (2), analyzing control orders issued by a control console (8) of the vehicle by comparing said orders with restriction policies stored in said list, and inhibiting (106) one of said control orders so as to prohibit the use of a function corresponding to a restriction registered in the list of restriction policies,
**characterized in that** when a restriction has to be modified or added, the restriction is applied only after a restart of the vehicle or after a reset of the function concerned.
